# EUROPEAN PATENT SPECIFICATION

(11) **EP 2 685 833 B1**
(45) Date of publication and mention of the grant of the patent: **04.05.2016**
(21) Application number: 12716521.5
(22) Date of filing: 16.03.2012
(51) Int. Cl.: A21D 2/18, A21D 2/26, A21D 2/36, A21D 10/02, A21D 13/06, A21D 10/00

(54) **GLUTEN-FREE COMPOSITION FOR BAKERY**
GLUTENFREIE ZUSAMMENSETZUNG FÜR BACKWAREN
COMPOSITION SANS GLUTEN POUR LA BOULANGERIE

(30) Priority: 18.03.2011 GB 201104585
(43) Date of publication of application: 22.01.2014
(73) Proprietor: Pulsetta Limited, Glasgow Strathclyde G2 7L (GB)
(72) Inventor: KARCHER, Karsten, Glasgow G2 7JL (GB); OBERLECHNER, Klaus, Glasgow G2 7JL (GB)
(74) Representative: Lawrie, Donald James
(86) International application number: PCT/GB2012/050591
(87) International publication number: WO 2012/127215

(56) References cited:
- DE-B- 1 123 994
- US-A1- 2006 003 072
- US-A1- 2007 160 728
- US-A1- 2007 275 121
- US-A1- 2009 181 147
- US-A1- 2011 045 146

## Description

### Field of Invention

The present invention relates to a composition and a method of manufacture. In particular, the present invention relates to a composition and a method for use in the manufacture of a leavened breadstuff or the like. The breadstuff obtained is nutritionally enhanced by the presence of a high relative amount of protein and a low relative amount of carbohydrate. In particular examples, the breadstuff can be gluten-free.

Bread is one of the oldest prepared foods in the world, having been baked since the Neolithic age (approx. 10,000 BC), primarily in the shape of simple flat breads. With the discovery of yeasts, leavened (or risen) bread has been baked at least since the times of Ancient Egypt (approx. 2,500 BC). In fact, the standard bread baking process has remained largely unchanged for over 4,500 years.
Leavened breads are commonly made from wheat as the gluten assists in the rising of bread and in keeping it risen. In contrast, flat breads (unleavened breads) using a wider variety of flours exist in various countries in the world, most notably maize tortillas in Mexico, rice bread in parts of Asia, chickpea soccas in the South of France, and lentil papadums (pappadums) in India. In Africa and South America, flat breads are also commonly made using flour from root tubers, primarily from cassava (yucca/manioc).

### Background Art

Whilst bread has been part of the staple diet for thousands of years, in its modern form it is not particularly nutritious. In particular, many types of bread comprise of mainly simple carbohydrates, and contain only small amounts of protein or complex carbohydrates. Furthermore, many types of bread lack nutrients, such as vitamins. Some bread manufacturers counter this by artificially adding vitamins and minerals.

Most types of bread, in particular leavened bread, contain gluten. When dough is fermented with yeast, the carbon dioxide gas generated by fermentation is retained by the gluten so that the gluten network is extended and the dough rises.

Unfortunately, consumption of gluten can result in adverse effects in some humans including, for example, bloating. Moreover, those who suffer from coeliac disease cannot consume gluten. According to US Department of Health and Human Services data, in the United States alone, over 2 million people suffer from coeliac disease; and a high prevalence of adverse reactions to gluten in Europe has also lead to an EU Directive which states that foods that contain gluten must specify this on the packaging. There is also a growing body of evidence that suggests that gluten intolerances are increasing.

Therefore, it would be of benefit to produce gluten-free bread, and in particular gluten-free leavened bread. However, it is very difficult to make leavened bread using gluten-free flours such as rice flour or buckwheat flour. This is because these flours do not contain gluten and therefore the carbon dioxide produced during the fermentation process is not retained within the dough. Thus, the dough does not rise efficiently, or stay risen.

With a better understanding of gluten intolerance today, some gluten-free leavened breads are being mass-produced using naturally gluten-free cereals such as maize (corn) and rice. Other flours being incorporated into these modern gluten-free breads are flour from pseudo-cereals (such as buckwheat and quinoa), flour from tubers (such as potatoes and tapioca), and flour from soybeans (soya beans). However, soybeans are included in lists of foodstuffs containing common allergens (in both EU and US Legislation noted below). Therefore, it can in some instances be beneficial to exclude soybeans from breadstuffs for people that are susceptible to these allergens.

US 2007/160728 describes the production of gluten-free bread from deflavoured pinto bean flour, rice flour, potato starch, tapioca flour, canola oil, sugar, egg, xantham gum, benecel, blanose, salt, non-fat dried milk and instant yeast.

US 2009/181147 describes a dry-mix for gluten-free baked goods, including breads, comprising rice flour, bean flour, tapioca starch, corn starch, baking powder, baking soda and any combination of guar, xanthan, locust bean gums and/or locust root.

US 2007/275121 describes a dry mixture composition for making gluten-free dough for bread, said dry mixture composition comprising a gel-forming plant material, a leavening agent, a foam forming ingredient, and one or more kinds of gluten-free flour.

DE 1123994 describes a process for preparing gluten-free baked products from non-wheat flour, starch, water, salt, yeast, sugar and fat. The starch flour may be maize starch, rice starch, potato starch, wheat starch and/or other kinds of starch. The non-wheat flour may be a legume flour, and/or a maize flour.

US 2006/003072 describes a dough composition prepared from water, fat and a dry mixture comprising at least a bean base, flour and salt. The bean bases comprise: black bean tortilla base, which comprises reconstitutable black bean powder (black beans, sugar, and calcium chloride); red bean tortilla base, which comprises red bean powder (red beans, sugar, and calcium chloride), or great northern bean tortilla base comprises great northern bean powder (great northern beans, sugar, and calcium chloride); and salt, sodium bicarbonate, fumaric acid, calcium propionate, sodium acid pyrophosphate, cornstarch, sodium stearoyl lactylate, guar gum, monoglycerides, yeast, and L-cysteine HCL.

US 2011/045146 describes a gluten-free cookie comprising a flour mixture; baking soda, gluten free baking powder, xanthum gum, arrow root starch, guar gum, corn meal, corn starch, corn, potato, potato starch, gelatin powder, lecithin, tapioca, tapioca starch, or any combination; margarine (casein/gluten free), apple sauce, other fruit purees, shortening oils which are gluten free and/or casein free; butter for gluten free only version, palm oil, coconut oil, palm fruit oil, soy bean oil, olive oil, canola oil, grapeseed oil or any combination; sugar and eggs. The flour mixture comprises white rice flour, or any rice flour, potato flour, potato starch, tapioca flour, potato starch flour, montina, mesquite, buckwheat, chickpeas, dehydrated potatoes, cornmeal, any nut flour, arrow root, white beans and/or any beans, teff, garbanzo bean flour, sorghum flour, fava bean flour, corn, almonds, black beans, ground whole flaxseeds, golden flaxseeds, green pea flour, hazelnuts ground into flour, millet, amaranth, gluten free oat flour, rolled oats, quinoa flakes, or any combination of the above.

One example of a gluten-free bread is given in EP 1561380. This document describes a gluten-free dough composition suitable for producing bread, said composition comprising gluten-free cereal flour and cellulose ethers.

Unfortunately, it is widely reported that the taste of modern gluten-free breads is somewhat poorer than wheat breads. This is reflected in the fact that gluten-free breads are commonly sold in specialist dietary shops, and in dietary food sections within supermarkets, rather than in the general bread section.

In addition, it is recognised that breads that contain pulses such as beans are very strongly flavoured, and thus are not of general use as a breadstuff, and in some cases can have a quite unpleasant taste.

Furthermore, many gluten-free breads use animal fat and proteins in the form of, for example, egg and milk or components or derivatives thereof. In many cases, egg and milk are used to help bind the bread mixture, and in some cases can act as a substitute for gluten. However, both egg and milk and the components and derivatives thereof have now been identified as belonging to food classes that contain common food allergens, or substances to which individuals are commonly intolerant. For example EU Directive 2007/68/EC on Food Allergy Labelling lists several foodstuffs which are likely to cause adverse reactions in individuals susceptible to food-related allergies or intolerances, and which therefore must be listed on the packaging of foods that contain them. Gluten (wheat), egg and milk are among the foodstuffs listed as containing common food allergens, or substances to which individuals are commonly intolerant. A similar list exists in the United States under the Food Allergen Labeling and Consumer Protection Act of 2004 (Public Law 108-282, Title II), and which again lists gluten (wheat), egg and milk. Similar legislation exists in Canada also.

Thus, gluten free breads made using egg or milk or the components or derivatives thereof often remain likely to cause adverse reactions in individuals susceptible to food-related allergies or intolerances. This is a particular problem for people who already have a gluten allergy or intolerance and who are often susceptible to other food allergies or intolerances.

Therefore, it is an object of the present invention to obviate or mitigate at least some of the disadvantages of the prior art.

A further object of the invention is to provide a composition (such as a flour, a flour mix or a dough) and/or a method, which will enable the preparation of a nutritionally enhanced (for example, protein-rich) and/or a substantially gluten-free, leavened breadstuff.

### Disclosure of Invention

According to one aspect of the invention, there is provided a gluten-free composition for use in making a gluten-free leavened breadstuff or the like, said composition comprising:
pulse flour,
starch flour comprising at least 70% by weight starch,
other flour comprising less than 70% by weight starch,
a leavening agent,
a fermentation agent, and
water,
wherein the composition comprises from about 4% by weight to about 27% by weight pulse flour, from about 13% by weight to about 36% by weight starch flour, from about 2.5% by weight to about 16.2% by weight other flour, and from 48% by weight to 59% by weight water.

The composition may comprise from about 6% by weight to about 24% by weight pulse flour, optionally from about 8% by weight to about 22% by weight pulse flour, optionally from about 10% by weight to about 20% by weight pulse flour, optionally from about 12% by weight to about 18% by weight pulse flour, optionally from about 13% by weight to about 16% by weight pulse flour.

The pulse flour may be derived from one or more of the pulses selected from the group consisting of: dry beans, dry broad beans, dry peas, chick-peas, dry cow peas, pigeon peas, lentils, Bambara beans, vetches, and minor pulses.

The composition may comprise from about 13% by weight to about 29% by weight starch flour, optionally from about 13% by weight to about 24% by weight starch flour, optionally from about 13% by weight to about 18% by weight starch flour, optionally from about 13% by weight to about 16% by weight starch flour.

The starch flour may be selected from one or more of the group consisting of: maize starch, tapioca starch, rice starch and starch from pulses.

The composition may comprise from about 2.5% by weight to about 13.1% by weight other flour, optionally from about 2.5% by weight to about 10% by weight other flour, optionally from about 6.5% by weight to about 8% by weight other flour.

The other flour may be maize flour.

The composition may further comprise: from about 0.3% by weight to about 2.5% by weight leavening agent; and/or from about 0.1 % by weight to about 0.8% by weight fermentation agent.

The composition may not include gluten, egg and/or milk or any components or derivatives thereof.

It will be appreciated that the components of the composition are chosen such that the total amount adds up to 100%.

According to another aspect of the invention, there is provided a method of preparing a gluten-free leavened breadstuff or the like comprising the steps of:
(a) reducing the anti-nutrient content of a pulse flour by hydrating and/or softening the pulse flour;
(b) combining the reduced anti-nutrient pulse flour with starch flour comprising at least 70% by weight starch, other flour comprising less than 70% by weight starch, a leavening agent and a fermentation agent to provide a gluten-free composition, wherein the gluten-free composition comprises from about 4% by weight to about 27% by weight pulse flour, from about 13% by weight to about 36% by weight starch flour, from about 2.5% by weight to about 16.2% by weight other flour, and from about 48% by weight to about 59% by weight water; and
(c) baking the composition to provide a gluten-free breadstuff or the like.

Step (a) may comprise combining the pulse flour with water at or around boiling point to form a water and pulse flour mix.

The method may comprise the further step of cooling the water and pulse flour mix, optionally to a temperature of from about 35°C to about 38°C.

The composition and method of the present invention enables the preparation of a breadstuff which is nutritious, soft, fluffy, sliceable, and flavoursome, and is therefore appealing to a wide range of consumers. The inclusion of pulses in the form of pulse flour is particularly important as pulses contain nutrients such as folate, iron, calcium, zinc, and B vitamins. In particular, pulses can contain about twice as much protein as wheat, and three times as much as rice. These components, nutrients and advantageous properties are therefore incorporated into the breadstuff.

The breadstuff can be made gluten-free and, surprisingly, retains its risen form. Therefore, the breadstuff can also be consumed by those that are gluten intolerant and coeliac sufferers. Moreover, this is achieved without the incorporation of animal fats and proteins such as egg and milk and components or derivatives thereof.

Embodiments of the invention will now be described, by way of example only.

### Modes for Carrying out the Invention

The following terms are used herein as follows:

"Pulse(s)" means one or more of the following: dry beans (*Phaseolus spp.*), dry broad beans (*Vicia faba*), dry peas, chick-peas, dry cow peas, pigeon peas, lentils (*Lens esculenta; Ervum lens*), Bambara beans, vetches, lupins and pulses nes (minor pulses) and the like.

"Cereal(s)" means one or more of the following: wheat, maize (corn), rice, barley, oats, rye, millet, sorghum, triticale, fonio, and pseudo-cereals (e.g. amaranth, buckwheat, quinoa) and the like, and other cereals known in the art, but not explicitly recited herein.

"Tuber(s)" means one or more of the following: stem and root tubers such as potato, tapioca, cassava (yucca/manioc), and root chicory and the like, and other tubers known in the art, but not explicitly recited herein.

"Other seed(s) and nut(s)" means one or more of the following: oilseeds (e.g. soybeans (soya beans), and sunflower seeds), coconuts, almonds, peanuts, acorns and the like as are commonly incorporated into foodstuffs, in particular breadstuffs, and other seeds and nuts known in the art, but not explicitly recited herein.

"Leavening agent(s)" or "raising agent(s)" means one or more of the following: yeast, sodium bicarbonate (baking soda), baking powder, and bacteria used in leavening and the like, and other leavening agents or raising agents known in the art, but not explicitly recited herein. "Leavening agent(s)" or "raising agent(s)" can also include other microbes.

"Fermentation agent(s)" means one or more of the following: sugar, sucrose, syrup, fruit juices, and honey and the like, and other fermentation agents known in the art, but not explicitly recited herein.

"Stabiliser(s)" means one or more of the following: xanthan gum, locust bean gum (carob bean gum) and the like, and other stabilisers known in the art, but not explicitly recited herein.

"Flavour(s)" means one or more of the following: salt, pepper, spices, and herbs and the like, and other flavours known in the art, but not explicitly recited herein.

"Pulse flour" or "pulse flour mix" means flour gained from a single type or any combination of pulses, usually through the process of milling. It can also include finely chopped, mashed and puréed pulses. Pulse flour does not include starch flour or refined starch.

"Starch flour" or "starch flour mix" means any combination of starch gained from pulses, cereals, tubers, and other seeds and nuts, usually through the process of mashing, filtering, extraction and/or refining. This includes, for example, gluten-free starch flour. In general, starch flour can be considered to be flour which has been refined such that the majority of the flour is starch. Starch flour comprises at least 70% by weight starch.

"Other flour" or "other flour mix" means any combination of flour gained from cereals, tubers, and other seeds and nuts, usually through the process of milling. This includes, for example, gluten-free other flour. Other flour does not include starch flour or pulse flour. Other flour comprises less than 70% by weight starch.

"Flour mix" or "total flour mix" means a flour or a composition comprising one or more types of flour including, for example, a combination of pulse flour, starch flour, and other flour. It may refer, for example, to one or more different flours in a composition, such as a dough composition.

"Cooking" is the process of preparing food with heat. Methods of cooking include, for example, baking, boiling, frying, roasting and smoking.

"Baking" is the process of cooking food with dry heat, typically in an oven, but also, for example, on hot stones or in hot ashes.

"Boiling" (including simmering and poaching) is the process of cooking food with wet heat, typically with hot or boiling water or milk.

"Standard bread baking process" refers to the process used for the vast majority of leavened breads made worldwide, using yeasts as at least one of the leavening agents. This process consists of mixing and kneading the various ingredients to create dough, letting the dough ferment and rise, re-kneading and fermenting the dough again if required, and then baking the dough to bread.

### Examples

A composition in accordance with the invention was prepared as follows.

Pulses selected from dry beans (*Phaseolus spp.*), dry broad beans (*Vicia faba*), dry peas, chick-peas, and lentils (*Lens esculenta; Ervum lens*) were chopped and milled to create a fine pulse flour mix, or pulse flour. Note that a finer pulse flour mix will result in finer bread. The pulses may be procured in a de-hulled and split state to improve the speed of the process.

Approximately 370 mL of water was boiled, and approximately 100g of pulse flour was added thereto. The pulse flour/water mix was stirred or otherwise agitated to provide a fine mash. The amount of water used can vary by around +/- 15% (i.e. from around 315 mL to around 425 mL). The pulse flour/water mix was boiled for sufficient time to eradicate antinutrients in the pulses, typically 30 seconds to 5 minutes. This step reduces the antinutrient content of the pulse flour, hydrates the pulse flour and softens the pulse flour. The pulse flour may be boiled for longer depending on the quantity and type of pulses being used. For example, if the pulse flour is not particularly fine, or if the pulses have not been split and de-hulled, it may be necessary to boil them for 20 minutes, or even longer.

Approximately 9g of other ingredients and flavours (salt, and spices) are then added to the pulse flour/water mix, and the so-formed mixture is further mixed. It will be appreciated that the addition of other ingredients is optional, and that the amounts and types of such ingredients can be varied to suit the desired taste or type of finished breadstuff.

Separately, approximately 150g of starch flour, 50g of other flour, 16g of leavening agent (14g of yeast and 2g of baking soda), 5g of fermentation agent (sugar) and 8g of stabiliser (xanthan gum) were combined and mixed, with particular care being taken to ensure that the yeast and sugar were closely mixed.

The pulse flour/water mix was allowed to cool to approximately 35°C to 38°C, before the addition of the separate mix containing the additional flours, leavening agent, fermentation agent, and stabiliser. The mixture was then kneaded into a dough, and the dough was left to ferment at approximately 35°C to 38°C for approximately 45 minutes.

The dough was then baked in a pre-heated oven at approximately 170°C for approximately 35 minutes to provide a risen, gluten-free bread.

In the example given above, the liquid used is water. However, it will be appreciated that other liquids that are typically used in the bread making process could also be used such as, for example, milk or low-acid fruit juice. It will be appreciated that in embodiments where the breadstuff is to be free from ingredients likely to cause adverse reactions in individuals susceptible to food-related allergies or intolerances, ingredients such as milk would not be used.

In the example given above baking soda is used as part of the leavening agent. However, it will be appreciated that baking soda is an optional ingredient. For example, in one embodiment the leavening agent is comprised of yeast only, without any further leavening agents such as baking soda being added.

Further breads were prepared using the flour mixes noted in Table 1 below. It should be noted that these flour mixes are combined with ingredients as noted above to provide a dough composition which can be baked to produce a breadstuff. The "GF" flour mixes used are gluten-free.

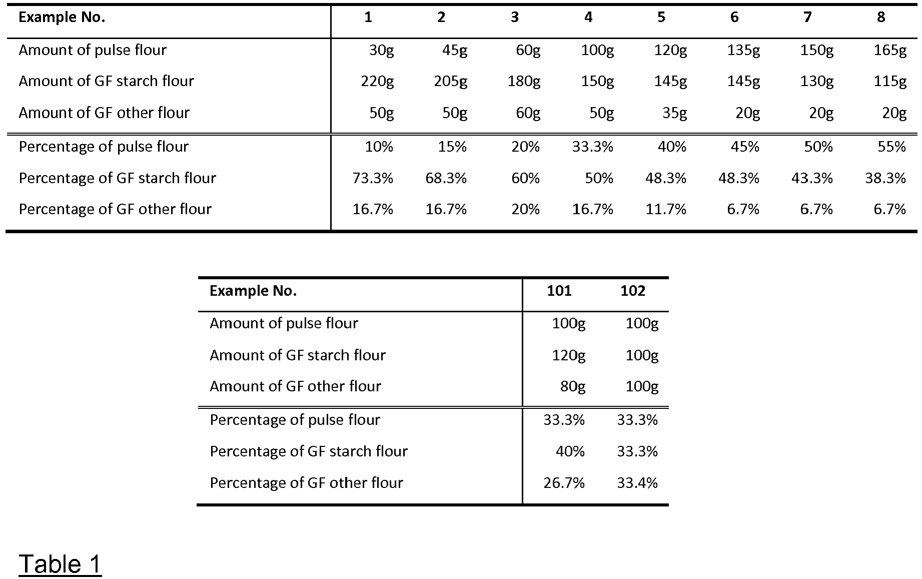

To obtain a dough, the flour mix described above is combined with from around 315 mL to around 425 mL water, typically around 370 mL.

Additional ingredients/components used with the flour mixes noted above to prepare a dough are as follows:
Leavening agent: 2g to 16g;
Fermentation agent: 1g to 5g;
Stabiliser: 0g to 8g; and
Other ingredients and flavours: 0g to 9g.

These additional ingredients/components can be used in different amounts along with different amounts of water and different flour mixes (as noted above) to provide different types of bread. Some examples are given in Table 2 below. Any of the flour mixes in Table 1 can be incorporated into the examples in Table 2.

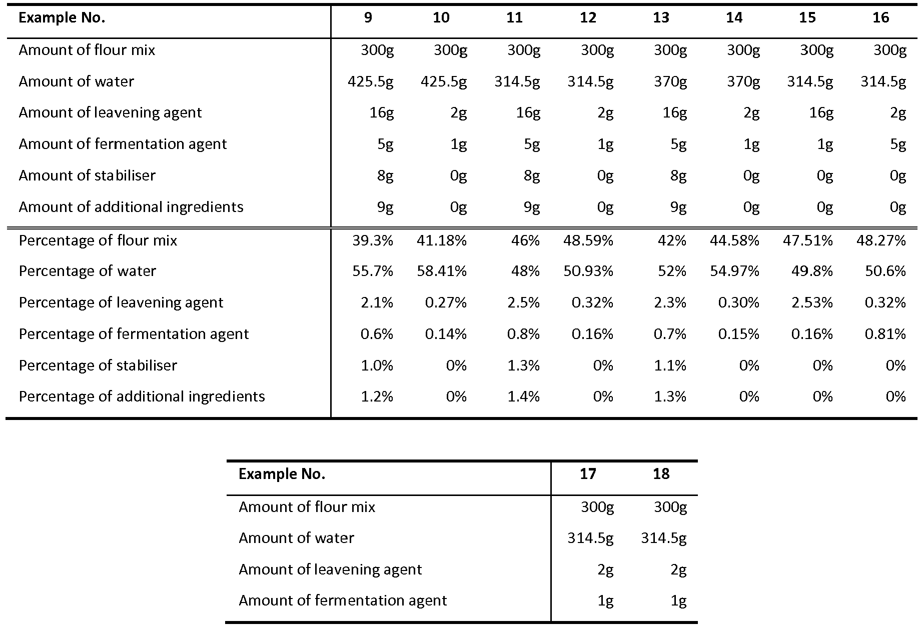

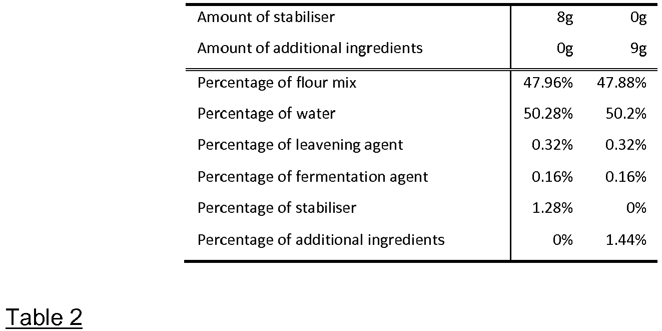

As can be seen from Table 2, the total amount of additional ingredients/other components is around 6% by weight.

Taking selected example compositions from Table 2, and applying selected flour mix compositions from Table 1, the percentage by weight amounts of the various components of the flour mix are as listed in Table 3 below.

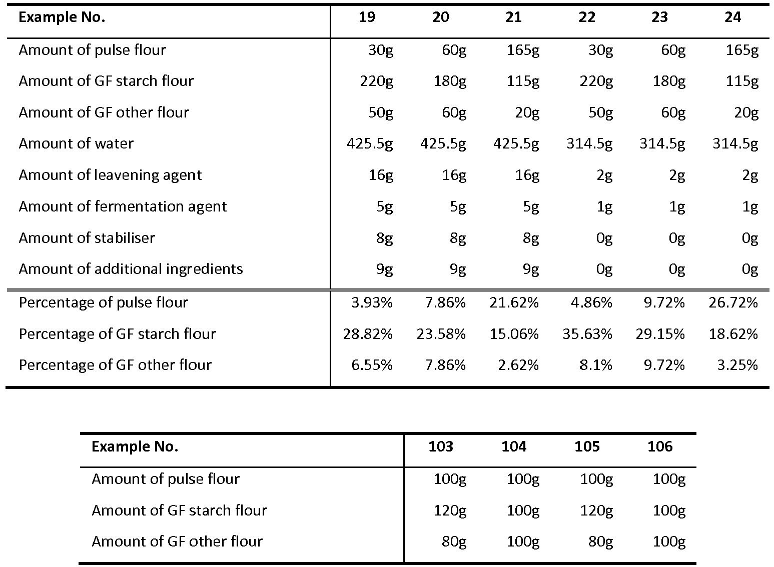

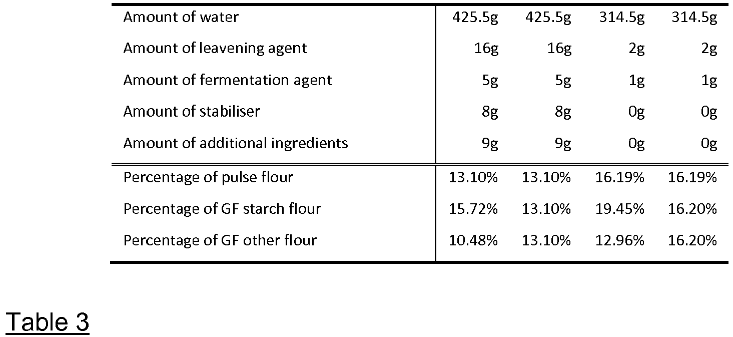

In addition to those in Table 3, other percentage ranges can be calculated by combining the flour mixes described in Table 1 and the composition mixes described in Table 2.

The flour mixes and compositions described above are gluten-free, and do not include or contain gluten. In addition, they are used to prepare a dough and a leavened bread.

In the embodiments described above, the pulse flour is derived from one or more of the pulses selected from the group consisting of: dry beans, dry broad beans, dry peas, chick-peas, dry cow peas, pigeon peas, and lentils. These pulses are particularly advantageous as they do not contain compounds known to be likely to cause adverse reactions in individuals susceptible to food-related allergies or intolerances. In one embodiment only peas and lentils are used; avoiding beans can mitigate flatulence. In another embodiment only lentils are used; lentils are particularly nutritious and they provide a breadstuff with a particularly pleasing taste and with good loaf volume.

However, it will be appreciated that other pulses can be used such as: dry beans, dry broad beans, dry peas, chick-peas, dry cow peas, pigeon peas, lentils, Bambara beans, vetches, lupins and minor pulses. The pulses used may exclude pulses recognised as likely to cause adverse reactions in individuals susceptible to food-related allergies or intolerances such as, for example, lupins.

The starch flour may be derived from one or more of the group consisting of pulses, cereals, tubers, seeds and nuts, and may comprise more than 70% by weight starch. The starch flour may comprise at least 70% by weight starch.

The starch flour may exclude flour derived from nuts, given that nuts are recognised as being likely to cause adverse reactions in individuals susceptible to food-related allergies or intolerances. Also, the seeds used may exclude seeds recognised as likely to cause adverse reactions in individuals susceptible to food-related allergies or intolerances such as, for example, sesame seeds, mustard seeds or soybeans (soya beans).

The inventors have found that starch flour derived from maize starch, tapioca starch, rice starch and starch from pulses provides particularly good taste and loaf volume.

The other flour may be derived from one or more of the group consisting of cereals, tubers, seeds and nuts, and may comprise less than 70% by weight starch.

The other flour may exclude flour derived from nuts, given that nuts are recognised as being likely to cause adverse reactions in individuals susceptible to food-related allergies or intolerances. Also, the seeds used may exclude seeds recognised as likely to cause adverse reactions in individuals susceptible to food-related allergies or intolerances such as, for example, sesame seeds, mustard seeds or soybeans (soya beans).

In one embodiment the other flour is maize flour. The inventors have found that maize flour provides particularly good taste and loaf volume.

The amounts of leavening agent, fermentation agent, stabiliser, and additional ingredients noted above are approximate, and may be altered depending on the type of bread desired, and the manufacturing process being used. For example, higher spinning mixing machines require less leavening agents and less fermentation agents.

The leavening agent, fermentation agent, stabiliser, and additional ingredients can be substituted for other similar ingredients, such as syrup instead of sugar, or carob bean gum instead of xanthan gum. It will be appreciated that the leavening agent, fermentation agent, stabiliser, and additional ingredients can be substituted in part or in whole for other similar ingredients. However, if a risen bread is to be produced, the yeast must be included. Further ingredients can also be added such as, for example, emulsifiers or vegetable oils.

It is very difficult to use pulses in a significant amount in breads, and in leavened breads in particular. This is because pulses, and pulse derivatives, tend be heavy (or dense) ingredients that prevent the bread from rising. In gluten-rich breads, such as those containing wheat, the addition of some heavier ingredients is easier to achieve as the gluten helps and protects the rising of the bread. However, to date, this has not been the case for breads containing pulses.

Therefore, in one aspect the invention enables leavened bread to be prepared without the use of gluten, providing soft, risen bread.

Pulses are not traditionally or often used in making breadstuffs for the following reasons.

Firstly, pulses are not easily obtainable as flour, especially on a large industrial scale.

Secondly, pulses also have a strong intrinsic taste, which makes them unpleasant to consume in a baked state. Surprisingly, this method and composition of the present invention creates tasty and savoury bread. This in itself is unusual, as most standard breads have little flavour.

Thirdly, most pulses cannot be used in a raw form as they contain naturally occurring antinutrients such as lectins, tannins, trypsin and α-amylase. The understanding of these antinutrients is a specialist subject, and only a limited body of research exists. The use of dry heat, such as baking as part of the standard bread baking process, is insufficient to guarantee the elimination of these antinutrients. Therefore, to eliminate or at least reduce antinutrients to a level safe for human consumption, another process step has been introduced in the method described herein.

The inventors have surprisingly found that the combination of different flours that they have created provides a nutritious bread with a pleasant taste. Thus, the breadstuff of the present invention can be manufactured on a commercial scale.

The composition and method of the present invention enables the preparation of a breadstuff which is nutritious, soft, fluffy, sliceable, and flavoursome, and is therefore appealing to a wide range of consumers. The inclusion of pulses in the form of pulse flour is particularly important as pulses contain nutrients such as folate, iron, calcium, zinc, and B vitamins.

In particular, pulses can contain about twice as much protein as wheat, and three times as much as rice. These components, nutrients and advantageous properties are therefore incorporated into the breadstuff. The breadstuff can be made gluten-free and, surprisingly, retains its risen form. Therefore, the breadstuff can also be consumed by those that are gluten intolerant and coeliac sufferers. Furthermore, the breadstuff does not contain egg or milk or any derivatives or components thereof. Thus, it can be consumed by those who are sensitive, allergic or intolerant of these foodstuffs, or who have a vegan diet.
The breadstuff of the present invention can be manufactured quickly and on a large scale, making the composition and process suitable for industrial bakeries. The product has appeal to those that are gluten intolerant, coeliac sufferers, people seeking nutritious (for example, high protein/low carbohydrate) food alternatives, and people seeking a flavoursome alternative to conventional bread.

## Claims

1. A gluten-free composition for use in making a gluten-free leavened breadstuff or the like, said composition comprising:
pulse flour,
starch flour comprising at least 70% by weight starch,
other flour comprising less than 70% by weight starch,
a leavening agent,
a fermentation agent, and
water,
wherein the composition comprises from about 4% by weight to about 27% by weight pulse flour, from about 13% by weight to about 36% by weight starch flour, from about 2.5% by weight to about 16.2% by weight other flour, and from 48% by weight to 59% by weight water.

2. A composition as claimed in any preceding claim, wherein the composition comprises from about 6% by weight to about 24% by weight pulse flour, optionally from about 8% by weight to about 22% by weight pulse flour, optionally from about 10% by weight to about 20% by weight pulse flour, optionally from about 12% by weight to about 18% by weight pulse flour, optionally from about 13% by weight to about 16% by weight pulse flour.

3. A composition as claimed in any preceding claim, wherein the pulse flour is derived from one or more of the pulses selected from the group consisting of: dry beans, dry broad beans, dry peas, chick-peas, dry cow peas, pigeon peas, lentils, Bambara beans, vetches, and minor pulses.

4. A composition as claimed in any preceding claim, wherein the composition comprises from about 13% by weight to about 29% by weight starch flour, optionally from about 13% by weight to about 24% by weight starch flour, optionally from about 13% by weight to about 18% by weight starch flour, optionally from about 13% by weight to about 16% by weight starch flour.

5. A composition as claimed in any preceding claim, wherein the starch flour is selected from one or more of the group consisting of: maize starch, tapioca starch, rice starch and starch from pulses.

6. A composition as claimed in any preceding claim, wherein the composition comprises from about 2.5% by weight to about 13.1% by weight other flour, optionally from about 2.5% by weight to about 10% by weight other flour, optionally from about 6.5% by weight to about 8% by weight other flour.

7. A composition as claimed in any preceding claim, wherein the other flour is maize flour.

8. A composition as claimed in any preceding claim, wherein said composition further comprises: from about 0.3% by weight to about 2.5% by weight leavening agent; and/or from about 0.1% by weight to about 0.8% by weight fermentation agent.

9. A composition as claimed in any preceding claim, wherein the composition does not include gluten, egg and/or milk or any components or derivatives thereof.

10. A method of preparing a gluten-free leavened breadstuff or the like comprising the steps of:
(a) reducing the anti-nutrient content of a pulse flour by hydrating and/or softening the pulse flour;
(b) combining the reduced anti-nutrient pulse flour with starch flour comprising at least 70% by weight starch, other flour comprising less than 70% by weight starch, a leavening agent, and a fermentation agent to provide a gluten-free composition, wherein the gluten-free composition comprises from about 4% by weight to about 27% by weight pulse flour, from about 13% by weight to about 36% by weight starch flour, from about 2.5% by weight to about 16.2% by weight other flour, and from about 48% by weight to about 59% by weight water; and
(c) baking the composition to provide a gluten-free breadstuff or the like.

11. A method as claimed in claim 10, wherein step (a) comprises combining the pulse flour with water at or around boiling point to form a water and pulse flour mix.

12. A method as claimed in claim 10 or claim 11, wherein the method comprises the further step of cooling the water and pulse flour mix, optionally to a temperature of from about 35°C to about 38°C.

## Patentansprüche

1. Glutenfreie Zusammensetzung für die Verwendung bei der Herstellung eines glutenfreien gesäuerten Broterzeugnisses oder dergleichen, wobei die Zusammensetzung Folgendes umfasst:
Hülsenfrüchtemehl,
Stärkemehl, das mindestens 70 Gewichts-% Stärke umfasst,
anderes Mehl, das weniger als 70 Gewichts-% Stärke umfasst,
ein Backtriebmittel,
ein Gärungsmittel und
Wasser,
wobei die Zusammensetzung Folgendes umfasst: von etwa 4 Gewichts-% bis etwa 27 Gewichts-% Hülsenfrüchtemehl, von etwa 13 Gewichts-% bis etwa 36 Gewichts-% Stärkemehl, von etwa 2,5 Gewichts-% bis etwa 16,2 Gewichts-% anderes Mehl und von 48 Gewichts-% bis 59 Gewichts-% Wasser.

2. Zusammensetzung nach einem vorstehenden Anspruch, wobei die Zusammensetzung Folgendes umfasst: von etwa 6 Gewichts-% bis etwa 24 Gewichts-% Hülsenfrüchtemehl, optional von etwa 8 Gewichts-% bis etwa 22 Gewichts-% Hülsenfrüchtemehl, optional von etwa 10 Gewichts-% bis etwa 20 Gewichts-% Hülsenfrüchtemehl, optional von etwa 12 Gewichts-% bis etwa 18 Gewichts-% Hülsenfrüchtemehl, optional von etwa 13 Gewichts-% bis etwa 16 Gewichts-% Hülsenfrüchtemehl.

3. Zusammensetzung nach einem vorstehenden Anspruch, wobei das Hülsenfrüchtemehl von einer oder mehreren der Hülsenfrüchte stammt, die aus der Gruppe ausgewählt sind, die aus Folgenden besteht: Trockenbohnen, getrockneten Saubohnen, getrockneten Erbsen, Kichererbsen, getrockneten Kuherbsen, Taubenerbsen, Linsen, Bambara-Bohnen, Wicken und kleinen Hülsenfrüchten.

4. Zusammensetzung nach einem vorstehenden Anspruch, wobei die Zusammensetzung Folgendes umfasst: von etwa 13 Gewichts-% bis etwa 29 Gewichts-% Stärkemehl, optional von etwa 13 Gewichts-% bis etwa 24 Gewichts-% Stärkemehl, optional von etwa 13 Gewichts-% bis etwa 18 Gewichts-% Stärkemehl, optional von etwa 13 Gewichts-% bis etwa 16 Gewichts-% Stärkemehl.

5. Zusammensetzung nach einem vorstehenden Anspruch, wobei das Stärkemehl aus einem oder mehreren der Gruppe ausgewählt sind, die aus Folgenden besteht: Maisstärke, Tapiokastärke, Reisstärke und Stärke aus Hülsenfrüchten.

6. Zusammensetzung nach einem vorstehenden Anspruch, wobei die Zusammensetzung Folgendes umfasst: von etwa 2,5 Gewichts-% bis etwa 13,1 Gewichts-% anderes Mehl, optional von etwa 2,5 Gewichts-% bis etwa 10 Gewichts-% anderes Mehl, optional von etwa 6,5 Gewichts-% bis etwa 8 Gewichts-% anderes Mehl.

7. Zusammensetzung nach einem vorstehenden Anspruch, wobei das andere Mehl Maismehl ist.

8. Zusammensetzung nach einem vorstehenden Anspruch, wobei die Zusammensetzung weiter Folgendes umfasst: von etwa 0,3 Gewichts-% bis etwa 2,5 Gewichts-% Backtriebmittel und/oder von etwa 0,1 Gewichts-% bis etwa 0,8 Gewichts-% Gärungsmittel.

9. Zusammensetzung nach einem vorstehenden Anspruch, wobei die Zusammensetzung kein Gluten, kein Ei und/oder keine Milch oder keine jedweden Bestandteile oder Derivate davon einschließt.

10. Verfahren zur Herstellung eines glutenfreien gesäuerten Broterzeugnisses oder dergleichen, das die folgenden Schritte umfasst:
(a) Reduzieren des Gehalts an Antinutritiva eines Hülsenfrüchtemehls durch Hydratisieren und/oder Erweichen des Hülsenfrüchtemehls;
(b) Vereinigen des Hülsenfrüchtemehls mit reduzierten Antinutritiva mit Stärkemehl, das mindestens 70 Gewichts-% Stärke umfasst, anderem Mehl, das weniger als 70 Gewichts-% Stärke umfasst, einem Backtriebmittel und einem Gärungsmittel, um eine glutenfreie Zusammensetzung bereitzustellen, wobei die glutenfreie Zusammensetzung Folgendes umfasst: von etwa 4 Gewichts-% bis etwa 27 Gewichts-% Hülsenfrüchtemehl, von etwa 13 Gewichts-% bis etwa 36 Gewichts-% Stärkemehl, von etwa 2,5 Gewichts-% bis etwa 16,2 Gewichts-% anderes Mehl und von etwa 48 Gewichts-% bis etwa 59 Gewichts-% Wasser; und
(c) Backen der Zusammensetzung, um ein glutenfreies Broterzeugnis oder dergleichen bereitzustellen.

11. Verfahren nach Anspruch 10, wobei der Schritt (a) das Vereinigen des Hülsenfrüchtemehls mit Wasser am oder etwa am Siedepunkt umfasst, um eine Mischung aus Wasser und Hülsenfrüchtemehl zu bilden.

12. Verfahren nach Anspruch 10 oder Anspruch 11, wobei das Verfahren den weiteren Schritt des Abkühlens der Mischung aus Wasser und Hülsenfrüchtemehl, optional auf eine Temperatur von etwa 35 °C bis etwa 38 °C, umfasst.

## Revendications

1. Une composition sans gluten pour utilisation dans la réalisation d'un grain ou d'une farine levés ou analogue sans gluten, ladite composition comprenant :
de la farine de légume sec,
de la farine d'amidon comprenant au moins 70 % en poids d'amidon,
une autre farine comprenant moins de 70 % en poids d'amidon,
un agent levant,
un agent de fermentation, et
de l'eau,
la composition comprenant d'environ 4 % en poids à environ 27 % en poids de farine de légume sec, d'environ 13 % en poids à environ 36 % en poids de farine d'amidon, d'environ 2,5 % en poids à environ 16,2 % en poids d'une autre farine, et de 48 % en poids à 59 % en poids d'eau.

2. Une composition telle que revendiquée dans n'importe quelle revendication précédente, la composition comprenant d'environ 6 % en poids à environ 24 % en poids de farine de légume sec, facultativement d'environ 8 % en poids à environ 22 % en poids de farine de légume sec, facultativement d'environ 10 % en poids à environ 20 % en poids de farine de légume sec, facultativement d'environ 12 % en poids à environ 18 % en poids de farine de légume sec, facultativement d'environ 13 % en poids à environ 16 % en poids de farine de légume sec.

3. Une composition telle que revendiquée dans n'importe quelle revendication précédente, dans laquelle la farine de légume sec est dérivée d'un ou de plusieurs des légumes secs sélectionnés dans le groupe constitué de : haricots secs, fèves sèches, pois secs, pois chiches, doliques secs, pois d'Angole, lentilles, haricots de Bambara, vesces, et légumes secs mineurs.

4. Une composition telle que revendiquée dans n'importe quelle revendication précédente, la composition comprenant d'environ 13 % en poids à environ 29 % en poids de farine d'amidon, facultativement d'environ 13 % en poids à environ 24 % en poids de farine d'amidon, facultativement d'environ 13 % en poids à environ 18 % en poids de farine d'amidon, facultativement d'environ 13 % en poids à environ 16 % en poids de farine d'amidon.

5. Une composition telle que revendiquée dans n'importe quelle revendication précédente, dans laquelle la farine d'amidon est sélectionnée à partir d'un élément ou plus du groupe constitué de : amidon de maïs, amidon de tapioca, amidon de riz et amidon provenant de légumes secs.

6. Une composition telle que revendiquée dans n'importe quelle revendication précédente, la composition comprenant d'environ 2,5 % en poids à environ 13,1 % en poids d'une autre farine, facultativement d'environ 2,5 % en poids à environ 10 % en poids d'une autre farine, facultativement d'environ 6,5 % en poids à environ 8 % en poids d'une autre farine.

7. Une composition telle que revendiquée dans n'importe quelle revendication précédente, dans laquelle l'autre farine est de la farine de maïs.

8. Une composition telle que revendiquée dans n'importe quelle revendication précédente, ladite composition comprenant en outre : d'environ 0,3 % en poids à environ 2,5 % en poids d'agent levant ; et/ou d'environ 0,1 % en poids à environ 0,8 % en poids d'agent de fermentation.

9. Une composition telle que revendiquée dans n'importe quelle revendication précédente, la composition n'incluant pas de gluten, pas d'oeuf et/ou de lait ou de composants ou dérivés de ceux-ci, quels qu'ils soient.

10. Une méthode de préparation d'un grain ou d'une farine levés ou analogue sans gluten comprenant les étapes consistant à :
(a) réduire la teneur en antinutriments d'une farine de légume sec en hydratant et/ou adoucissant la farine de légume sec ;
(b) combiner la farine de légume sec à antinutriments réduits avec de la farine d'amidon comprenant au moins 70 % en poids d'amidon, une autre farine comprenant moins de 70 % en poids d'amidon, un agent levant, et un agent de fermentation afin de fournir une composition sans gluten, la composition sans gluten comprenant d'environ 4 % en poids à environ 27 % en poids de farine de légume sec, d'environ 13 % en poids à environ 36 % en poids de farine d'amidon, d'environ 2,5 % en poids à environ 16,2 % en poids d'une autre farine, et d'environ 48 % en poids à environ 59 % en poids d'eau ; et
(c) cuire la composition afin de fournir un grain ou une farine ou analogue sans gluten.

11. Une méthode telle que revendiquée dans la revendication 10, dans laquelle l'étape (a) comprend le fait de combiner la farine de légume sec avec de l'eau au point d'ébullition ou aux alentours du point d'ébullition afin de former un mélange eau et farine de légume sec.

12. Une méthode telle que revendiquée dans la revendication 10 ou la revendication 11, la méthode comprenant l'étape supplémentaire consistant à refroidir le mélange eau et farine de légume sec, facultativement jusqu'à une température d'environ 35 °C à environ 38 °C.
